# EUROPEAN PATENT SPECIFICATION

(11) **EP 1 300 817 B1**
(45) Date of publication and mention of the grant of the patent: **12.04.2006**
(21) Application number: 02256395.1
(22) Date of filing: 16.09.2002
(51) Int. Cl.: G08G 1/00, G08G 1/01

(54) **Navigation data providing system, server and navigation terminal**
Navigationsdatenbereitstellungssystem, Server und Navigationsendgerät
Système pour fournir des données de navigation, serveur et terminal de navigation

(30) Priority: 20.09.2001 JP 2001286191
(43) Date of publication of application: 09.04.2003
(73) Proprietor: Pioneer Corporation, Meguro-ku, Tokyo (JP)
(72) Inventor: Shioda, Takehiko, C/o Pioneer Corporation, Tsurugashima-shi, Saitama (JP); Yamauchi, Keiichi, C/o Pioneer Corporation, Tsurugashima-shi, Saitama (JP)
(74) Representative: Haley, Stephen

(56) References cited:
- WO-A-01/22633
- DE-A- 10 024 007
- US-B1- 6 282 491

## Description

The present disclosure relates to the subject matter contained in Japanese Patent Application No. 2001-286191 filed on September 20, 2001, which is incorporated herein by reference in its entirely.

The present invention relates to the technical field for a navigation data provision system that comprises: a navigation terminal installed in a mobile unit, such as a vehicle; a broadcasting business facility which broadcasts various data using a broadcast wave; and a navigation business facility for the exchange, along a communication line, of various data with the broadcastingbusiness facility or the navigation system.

As a consequence of recent progress in communication techniques, a so-called communication navigation system has been developed that distributes geographical data, or district data, through communications established with individual vehicles, which facilitates the use of the data for navigation.

This navigation system establishes a communication line, provided across the Internet, between a navigation server and a vehicle, and employs this communication line for the exchange of various data.

Further, a fusion system has also been developed that, to establish means for the provision of a desired service, can fuse two communication networks, i.e., a broadcasting network using a broadcast wave and a private communication network using the Internet.

However, a system that will enable the application of the fusing system for the navigation system has not yet been developed.

DE-A-10024007 discloses a multimedia system capable of providing navigation data. US-B-6282491 discloses a car radio with an RDS module, wireless telephone and navigation system in a single housing.

According to the present invention, there is provided a navigation data provision system comprising:
a broadcasting business facility for the dissemination of broadcast data that, at the least, includes drive plan data;
a navigation business facility which selects, from said drive plan data, at least one set of drive plan data that matches user preference data; and
a navigation terminal which receives said drive plan data and which employs said drive plan data to help prepare a route guide for a vehicle, characterised in that:
   said broadcasting business facility includes a broadcaster which broadcasts multiple sets of drive plan data as broadcast waves, and
   a transmitter which transmits said multiple sets of drive plan data along a predetermined communication line;
   said navigation business facility includes receptorwhich receives said multiple drive plan data from said broadcasting business facility along said predetermined communication line,
   a preference data accumulator which stores preference data for a user,
   a selector which employs said preference data to select at least one of said multiple sets of drive plan data, and
   a transmitter which transmits, to said navigation terminal, a reception channel for said selected drive plan data; and
   said navigation terminal includes channel setterwhich sets a reception channel for said navigation terminal to serve as said reception channel for said drive plan data selected by said navigation business facility,
   extractor which extracts destination data from said drive plan data received at said reception channel, and
   a route setting processor which uses said destination data that is extracted to perform a route setting process.

According to the navigation data provision system of the invention, a large amount of drive plan data, to include image data, can be provided for a user by using a broadcasting wave, and as is desired by the user, needed drive plan data can be selected from among many available sets. Therefore, a drive plan provision system that very efficiently utilizes the communication line can be constructed, and the data can be provided in a user-friendly manner.

In the Drawings;
Fig. 1 is a diagram showing the complete configuration of a navigation system according to the present invention.
Fig. 2 is a block diagram showing a navigation apparatus. mounted on a vehicle in accordance with the present invention.
Fig. 3 is a sequence chart of the processing performed for the navigation system of the invention.
Fig. 4 is another sequence chart of the processing performed for the navigation system of the invention.

A car navigation data provision system according to one embodiment of the present invention will now be described while referring to the accompanying drawings.

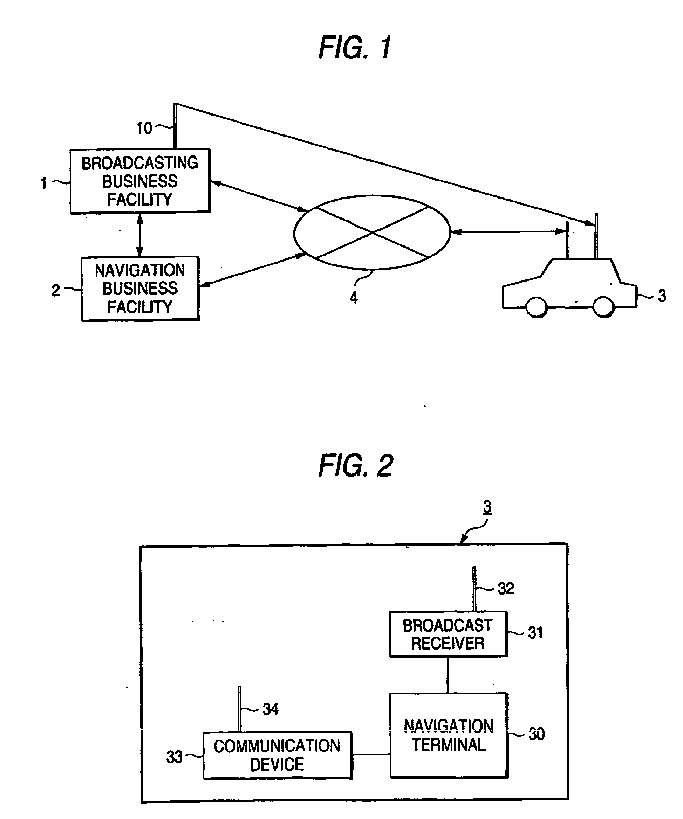

Fig. 1 is a diagram showing the basic configuration of a car navigation data provision system according to the present invention.

The car navigation data provision system in Fig. 1 comprises: a broadcasting business facility 1, a navigation business facility 2, and a vehicle 3, all of which are respectively connected to the Internet 4. The vehicle 3 may be connected to the Internet 4 through a portable telephone network, or by a short-distance radio communication system. The broadcasting business facility 1 and the navigation business facility 2 are connected along a special, predetermined line.

The broadcasting business facility 1 includes a broadcasting antenna 10, as well as a communication line transmitter/receiver (not shown), used for the dissemination, as a broadcast wave, of a digital ground wave to each district. The communication line transmitter/receiver transmits, to the navigation business facility 2 or across the Internet 4, the digital ground wave and data that includes additional information related to the digital ground wave, or receives various data from the navigation business facility 2 along a special line or across the Internet 4.

In this embodiment, drive plan data is broadcast as a broadcasting wave. For the broadcast, the drive plan data is sorted for dissemination to predetermined channels for the individual areas. A channel represents member which selects specific data for a system which multiplexes and transmits multiple sets of data, such as a case wherein a representative number is assigned to the frequency of each broadcasting wave that is multiplexed using frequency division, a case wherein a representative number is assigned for a time slot in one frequency band that is multiplexed along a time axis, or a case wherein a representative number is assigned for a series of packets that are obtained by being multiplexed and divided for data transmission.

The navigation business facility 2, which includes a communication line transmitter/receiver (not shown), functions as a server on the Internet 4. Further, the navigation business facility 2, which also includes preference data accumulator (not shown) which accumulates preference data for a user, receives the drive plan data from the broadcasting business facility 1 along a special line or across the Internet 4.

The drive plan data may be generated by the navigation business facility 2, and may be transmitted to the broadcasting business facility 1 along the special line or across the Internet 4.

The navigation business facility 2 also includes member which employs the user' s preference data to select an appropriate drive plan from among an enormous amount of drive plan data, and which transmits, to the vehicle 3, data for a channel through which the drive plan is broadcast.

As is shown in Fig. 2, the vehicle 3 comprises a navigation terminal 30, a broadcast receiver 31, a broadcast reception antenna 32, a communication device 33 and a communication antenna 34.

The navigation terminal 30 is mounted on the vehicle 3 as a mobile unit, and includes various functions, such as a route guide function which helps to guide the vehicle 3.

The broadcast receiver 31 further includes a broadcast reception antenna 32, at which a broadcast wave provided by the broadcasting business facility 1 is received. It should be noted that the channel used for reception is controlled by the navigation terminal 30, and when the drive plan provision channel, which is one of the broadcast channels, is used for the dissemination of data, this channel must be selected in order for the data carried by the channel to be obtained. Thus, when multiple drive plan channels are assigned for each area, a desired channel may be selected.

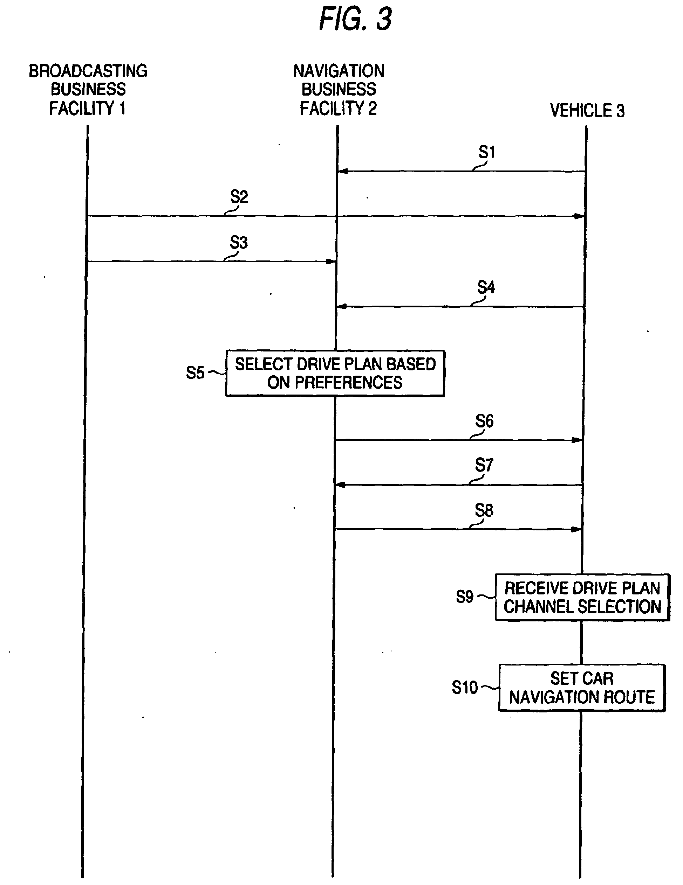

The communication unit 33, which includes a communication antenna 34, can receive a data wave provided by the navigation business facility 2, and can transmit desired data to the navigation business facility 2. The processing for this embodiment will now be described while referring to the sequence chart in Fig. 3. The individual operations performed by the broadcasting business facility 1, the navigation business facility 2 and the vehicle 3 (navigation terminal 30), and the operations jointly performed by these components are shown along the time axis in the sequence chart. This sequential processing is performed by computer system programs that are incorporated in the broadcasting business facility 1, the navigation business facility 2 and the vehicle 3 (navigation terminal 30).

First, preference data for the user who employs the car navigation system is received from the vehicle 3 and is registered at the navigation business facility 2 (step S1). The preference data to be registered includes personal data, such as the age, the gender, the family members and the hobbies of the user, and other data, such as the purpose of the travel and the car occupants. The first datamentioned shouldbe registeredbefore the navigation system is actually employed by the user, and the second data should be registered each time immediately before the user starts driving.

The broadcasting business facility 1 always provides various drive plan data using data broadcasting (step S2). Example drive plan data are a Hakone tour drive plan or a Nikko sightseeing drive plan that includes route setting data for the driving destination and locations en route, sightseeing spot data designating each location en route and the destination (longitudes and latitudes, telephone numbers and addresses, designation types, explanatory articles, photos and permission fees) and restaurant data (types of restaurants, their atmospheres and their menus and prices). It should be noted that in the route setting process at step S10, which will be described later, data that can be set as destination data can be added to the drive plan data.

Drive plan data may also include data for music that is to be reproduced during a drive. Furthermore, in addition to music, advertisements may also be inserted into a drive plan, and by charging for this, as an advertising service, the broadcasting station that transmits the drive plan can earn additional income.

The broadcasting business facility 1 is connected to the navigation business facility 2 via the Internet 4, and provides, for the navigation business facility 2, drive plan data that is currently being broadcast and auxiliary data for selecting a plan in accordance with a user's preferences (step S3). In this embodiment, the system has been so designed that the broadcastingbusiness facility 1 provides data for the navigation business facility 2 across the Internet 4; however, the navigation business facility 2 may instead receive a broadcast directly.

Before starting to drive, a user transmits to the navigation business facility 2, from the vehicle 3, a drive plan selection request across the Internet 4 (step S4).

Upon receiving the drive plan selection request from the user (step S4), the navigation business facility 2 tentatively determines, based on the user's preference data that has been registered in advance, which drive plan data that currently is being broadcast is appropriate for the user (step S5). Pursuant to this determination, either one set or multiple sets of drive plans may be selected.

The navigation business facility 2 may charge a fee (step S6), which the user pays to the navigation business facility 2 using an electronic accounting method (step S7). And of the money that is thus remitted, the navigation business facility 2 may pay part to the broadcasting business facility 1.

When the payment steps (steps S6 and S7) have been performed, the navigation business facility 2, after confirming that the payment is correct, transmits the drive plan channel selection data across the Internet 4 to the vehicle 3, so that the selected drive plan will be available for use by the broadcast receiver 31 in the vehicle 3 (step S8).

When the payment steps (steps S6 and S7) are not performed, the navigation business facility 2 also transmits the drive plan channel selection data across the Internet 4 to the vehicle 3, so that the selected drive plan will be available for use by the broadcast receiver 31 in the vehicle 3 (step S8).

Upon receiving the drive plan channel selection data, the vehicle 3 adjusts the reception channel for the broadcast receiver 31, and employs the drive plan channel selection data to receive the selected drive plan data that are broadcast.

Thereafter, the user confirms the contents of the drive plan (not shown) that is received, and when the drive plan is satisfactory, the user instructs the car navigation system to use it to set up a navigation route to travel (step S10). For this setup, only that destination data need be employed that has been added to the drive plan data provided by the broadcasting business facility 1.

When multiple sets of drive plan data are received, these multiple drive plans are displayed on the screen of the car navigation system, so that the user may select a desired plan, in accordance with his or her preferences, and may instruct the car navigation system to set up a navigation route to travel.

As is described above, according to this embodiment, by using a broadcasting wave a large amount of drive plan data, including image data, can be provided for a user, and the vehicle and the navigation business facility can perform, along a communication line such as the Internet, a process by which desired drive data can be selected. A drive plan provision system can therefore be constructed that very efficiently utilizes the communication line.

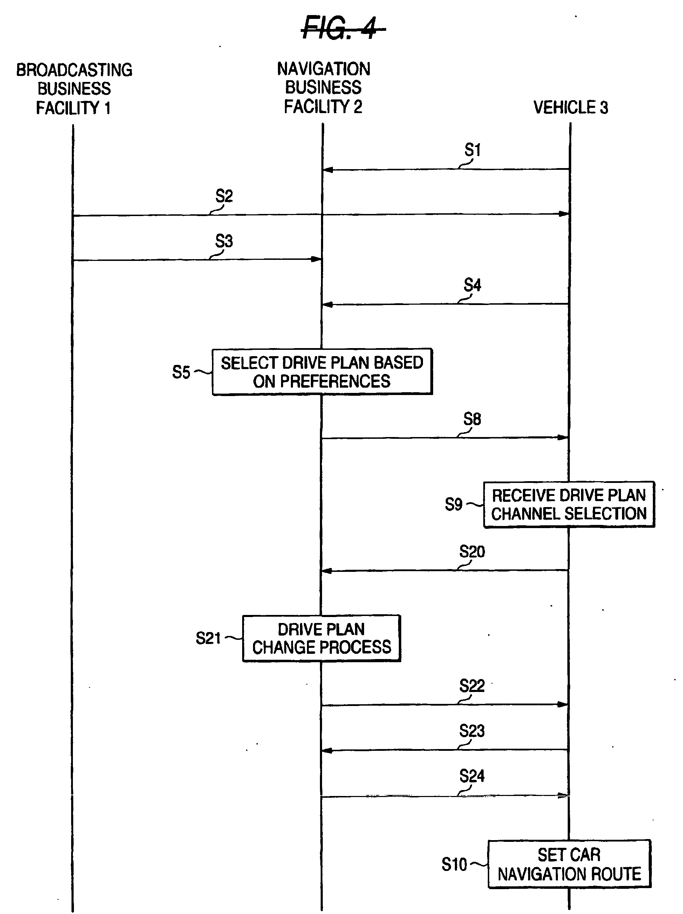

Another processing sequence for the embodiment will now be described while referring to the sequence chart in Fig. 4. As in Fig. 3, the individual operations performed by the broadcasting business facility 1, the navigation business facility and the vehicle 3 (navigation terminal 30), and the operations performed by them jointly are shown along the time axis in the sequence chart. Control for the processing performed is provided by programs supplied by the computer systems that are incorporated in the broadcasting business facility 1, the navigation business facility 2 and the vehicle 3 (navigation terminal 30).

Since steps S1 to S5 are the same as those in Fig. 3, no further explanation for them will be given and only the subsequent steps will now be described.

Upon receiving a drive plan selection request from a user (step S4), the navigation business facility 2 tentatively determines, based on the user's preference data that has been registered in advance, which drive plan data that currently is being broadcast is appropriate for the user (step S5). Pursuant to this determination, either one set or multiple sets of drive plan data may be selected.

At step S8, although the fee charging process has not yet been performed, drive play channel selection data are transmitted to the vehicle 3 (step S8).

The vehicle 3 receives the selected drive plan channel selection data (step S9), and when the user desires to change a part of the selected drive plan that has been received, the user transmits to the navigation business facility 2, across the Internet 4, altered drive plan data indicating that a change in the plan is requested (step S20). In this instance, a partial change in a drive plan would consist of the skipping of one location en route or the exchange of one location en route with another sightseeing spot.

The navigation business facility 2, in accordance with the request it received, changes the drive plan (step S21) so that it corresponds with the expressed preference of the user.

The navigation business facility 2 may change the fee that is charged in this case (step S22) , and the user may pay the fee to the navigation business facility 2 using an electronic accounting method (step S23). And of the money that is thus remitted, the navigation business facility 2 may pay part to the business facility 1.

When the payment steps (steps S22 and S23) have been performed, the navigation business facility 2, after confirming that the payment is correct, transmits the updated drive plan data to the vehicle 3 across the Internet 4 (step S24).

Even when the payment steps (steps S22 and S23) have not been performed, the navigation business facility 2 transmits the updated drive plan data to the vehicle 3 across the Internet 4.

The navigation terminal 30 then sets up a navigation route to travel based on the received drive plan data (step S10).

As is described above, according to the embodiment, the drive plan data provided by the broadcasting business facility 1 can be changed to obtain a drive plan that is consonant with a user's preferences. Therefore, data can be provided that is more user friendly.

As is described above, the navigation data provision system of the invention comprises:
a broadcasting business facility for the dissemination of broadcast data that, at the least, includes drive plan data;
a navigation business facility which selects, from the drive plan data, at least one set of drive plan data that matches user preference data; and
a navigation terminal which receives the drive plan data and which employs the drive plan data to help prepare a route guide for a vehicle,
wherein the broadcasting business facility includes
   broadcaster which broadcasts multiple sets of drive plan data as broadcast waves, and
   transmitter which transmits the multiple sets of drive plan data along a predetermined communication line,
wherein the navigation business facility includes
   receptor which receives the multiple drive plan data from the broadcasting business facility along the predetermined communication line,
   preference data accumulator which stores preference data for a user,
   selector which employs the preference data to select at least one of the multiple sets of drive plan data, and
   transmitter which transmits, to the navigation terminal, a reception channel for the selected drive plan data, and
wherein the navigation terminal includes
   channel setter which sets a reception channel for the navigation terminal to serve as the reception channel for the drive plan data selected by the navigation business facility,
   extractor which extracts destination data from the drive plan data received at the reception channel, and
   a route setting processor which uses the destination data that is extracted to perform a route setting process. Therefore, a large amount of drive plan data, to include image data, can be provided for a user by using a broadcasting wave, and as is desired by the user, needed drive plan data can be selected from among many available sets. Therefore, a drive plan provision system that very efficiently utilizes the communication line can be constructed, and the data can be provided in a user-friendly manner.

### [Fig. 1]

1: broadcasting business facility
2: navigation business facility
3: vehicle
4: Internet

### [Fig. 2]

30: navigation terminal
31: broadcast receiver
33: communication device

### [Fig. 3]

broadcasting business facility 1
navigation business facility 2
vehicle 3
S1: Register user's preference data.
S2: Transmit multiple sets of drive plan data.
S3: Contents of drive plan data.
S4: Request drive plan selection.
S5: Select drive plan based on preferences.
S6: Charge fee.
S7: Payment process.
S8: Drive plan channel selection data.
S9: Receive drive plan channel selection.
S10: Set car navigation route.

### [Fig. 4]

broadcasting business facility 1
navigation business facility 2
vehicle 3
S1: Register user's preference data.
S2: Transmit multiple sets of drive plan data.
S3: Contents of drive plan data.
S4: Request drive plan selection.
S5: Select drive plan based on preferences.
S8: Drive plan channel selection data.
S9: Receive drive plan channel selection.
S10: Set car navigation route.
S20: Request to change drive plan.
S21: Drive plan change process.
S22: Payment request.
S23: Payment process.
S24: Re-transmit changed drive plan.

## Claims

1. A navigation data provision system comprising:
a broadcasting business facility (1) for the dissemination of broadcast data that, at the least, includes drive plan data;
a navigation business facility (2) which selects, from said drive plan data, at least one set of drive plan data that matches user preference data; and
a navigation terminal (30) which receives said drive plan data and which employs said drive plan data to help prepare a route guide for a vehicle (3), **characterised in that**:
said broadcasting business facility (1) includes
a broadcaster which broadcasts multiple sets of drive plan data as broadcast waves, and
a transmitter which transmits said multiple sets of drive plan data along a predetermined communication line;
said navigation business (2) facility includes
a receptor which receives said multiple drive plan data from said broadcasting business facility along said predetermined communication line,
a preference data accumulator which stores preference data for a user,
a selector which employs said preference data to select at least one of said multiple sets of drive plan data, and
a transmitter which transmits, to said navigation terminal (30), a reception channel for said selected drive plan data; and
said navigation terminal (30) includes
a channel setter which sets a reception channel for said navigation terminal to serve as said reception channel for said drive plan data selected by said navigation business facility,
an extractor which extracts destination data from said drive plan data received at said reception channel, and
a route setting processor which uses said destination data that is extracted to perform a route setting process.

2. The navigation data provision system according to claim 1, wherein multiple sets of drive plan data, each of which include data for guiding users to sightseeing spots and positioning data therefor, are provided by said broadcasting business facility (1), and wherein
said extractor of said navigation terminal (30) extracts said position data.

3. The navigation data provision system according to claim 1, wherein
said drive plan data are prepared and are provided to said broadcasting business facility (1) by said navigation business facility (2).

4. A navigation server comprising:
a receptor which receives drive plan data from a broadcasting business facility
(1) according to claim 1 that transmits broadcast data, including said drive plan data; and **characterised by**
a preference data accumulator which accumulates preference data for a user;
a selector which employs said preference data to select at least one set of said multiple drive plan data; and
a transmitter which transmits to a navigation terminal a reception channel for said selected drive plan data.

5. The navigation server according to claim 4, further comprising:
a preparation member which prepares said drive plan data; and
a provider which provides said prepared drive plan data for said broadcasting business facility.

6. A navigation terminal (30) **characterised by** comprising:
channel setter which sets a reception channel for said navigation terminal based on reception channel data received from a navigation business facility (2) according to claim 1;
an extractor which extracts destination data from drive plan data that are received through said reception channel; and
a route setting unit which performs a route setting process by using said extracted destination data.

## Patentansprüche

1. Navigationsdaten-Bereitstellungssystem, das umfasst:
eine Rundsendeunternehmen-Einrichtung (1), die Rundsende-Daten verbreitet, die wenigstens Fahrtrouten-Daten enthalten;
eine Navigationsunternehmen-Einrichtung (2), die aus den Fahrtrouten-Daten wenigstens einen Satz Fahrtrouten-Daten auswählt, der Nutzerpräferenz-Daten entspricht; und
ein Navigations-Endgerät (30), das die Fahrtrouten-Daten empfängt und die Fahrtrouten-Daten verwendet, um eine Streckenführung für ein Fahrzeug (3) herzustellen,
**dadurch gekennzeichnet, dass**
die Rundsendeunternehmen-Einrichtung (1) enthält:
eine Rundsendeeinrichtung, die mehrere Sätze von Fahrtrouten-Daten als Rundsendewellen rundsendet, und
eine Sendeeinrichtung, die die mehreren Sätze von Fahrtrouten-Daten auf einer vorgegebenen Kommunikationsleitung sendet;
wobei die Navigationsunternehmen-Einrichtung (2) enthält:
eine Empfangseinrichtung, die die mehreren Fahrtrouten-Daten von der Rundsendeunternehmen-Einrichtung auf der vorgegebenen Kommunikationsleitung empfängt,
eine Präferenz-Daten-Speichereinrichtung, die Präferenz-Daten für einen Nutzer speichert,
eine Auswähleinrichtung, die die Präferenz-Daten verwendet, um wenigstens einen der mehreren Sätze von Fahrtrouten-Daten auszuwählen, und
eine Sendeeinrichtung, die einen Empfangskanal für die ausgewählten Fahrtrouten-Daten zu dem Navigations-Endgerät (30) sendet; und
das Navigations-Endgerät (30) enthält:
eine Kanaleinstelleinrichtung, die einen Empfangskanal für das Navigations-Endgerät einstellt, der als der Empfangskanal für die durch die Navigationsunternehmen-Einrichtung ausgewählten Fahrtrouten-Daten dient,
eine Extrahiereinrichtung, die Ziel-Daten aus den an dem Empfangskanal empfangenen Fahrtrouten-Daten extrahiert, und
eine Streckeneinstell-Verarbeitungseinrichtung, die die extrahierten Ziel-Daten nutzt, um einen Streckeneinstell-Prozess durchzuführen.

2. Navigationsdaten-Bereitstellungssystem nach Anspruch 1, wobei mehrere Sätze von Fahrtrouten-Daten, von denen jeder Daten zum Führen von Nutzern zu Sehenswürdigkeiten und Positions-Daten dafür enthält, durch die Rundsendeunternehmen-Einrichtung (1) bereitgestellt werden, und wobei
die Extrahiereinrichtung des Navigations-Endgerätes (30) die Positions-Daten extrahiert.

3. Navigationsdaten-Bereitstellungssystem nach Anspruch 1, wobei die Fahrtrouten-Daten durch die Navigationsunternehmen-Einrichtung (2) erzeugt und der Rundsendeunternehmen-Einrichtung (1) bereitgestellt werden.

4. Navigations-Server, der umfasst:
eine Empfangseinrichtung, die Fahrtrouten-Daten von einer Rundsendeunternehmen-Einrichtung (1) nach Anspruch 1 empfängt, die Rundsendedaten einschließlich der Fahrtrouten-Daten sendet; und **gekennzeichnet durch**
eine Präferenz-Daten-Speichereinrichtung, die Präferenz-Daten für einen Nutzer speichert;
eine Auswähleinrichtung, die die Präferenz-Daten verwendet, um wenigstens einen Satz der mehreren Fahrtrouten-Daten auszuwählen; und
eine Sendeeinrichtung, die einen Empfangskanal für die ausgewählten Fahrtrouten-Daten zu einem Navigations-Endgerät sendet.

5. Navigations-Server nach Anspruch 4, der des Weiteren umfasst:
ein Erzeugungselement, das die Fahrtrouten-Daten erzeugt; und
eine Bereitstellungseinrichtung, die die erzeugten Fahrtrouten-Daten für die Rundsendeunternehmen-Einrichtung bereitstellt.

6. Navigations-Endgerät (30), **dadurch gekennzeichnet, dass** es umfasst:
eine Kanaleinstelleinrichtung, die einen Empfangskanal für das Navigations-Endgerät auf Basis von einer Navigationsunternehmen-Einrichtung (2) nach Anspruch 1 empfangener Empfangskanal-Daten einstellt;
eine Extrahiereinrichtung, die Ziel-Daten aus über den Empfangskanal empfangenen Fahrtrouten-Daten extrahiert, und
eine Streckeneinstelleinheit, die einen Streckeneinstell-Prozess unter Nutzung der extrahierten Ziel-Daten durchführt.

## Revendications

1. Système pour fournir des données de navigation comprenant :
une installation de diffusion (1) pour la diffusion de données de diffusion qui, au moins, comprennent des données de plan de conduite ;
une installation de navigation (2) qui sélectionne, à partir desdites données de plan de conduite, au moins un ensemble de données de plan de conduite qui correspondent à des données de préférence utilisateur ; et
un terminal de navigation (30) qui reçoit lesdites données de plan de conduite et qui emploie lesdites données de plan de conduite pour aider à préparer un guide d'itinéraire pour un véhicule (3), **caractérisé en ce que** :
ladite installation de diffusion (1) comprend
un dispositif de diffusion qui diffuse de multiples ensembles de données de plan de conduite sous forme d'ondes de diffusion, et
un émetteur qui transmet lesdits multiples ensembles de données de plan de conduite le long d'une ligne de communication prédéterminée ;
ladite installation de navigation (2) comprend
un récepteur qui reçoit lesdites multiples données de plan de conduite provenant de ladite installation de diffusion le long de ladite ligne de communication prédéterminée,
un accumulateur de données de préférence qui stocke les données de préférence pour un utilisateur,
un sélecteur qui emploie lesdites données de préférence pour sélectionner au moins l'un desdits multiples ensembles de données de plan de conduite, et
un émetteur qui transmet, audit terminal de navigation (30), un canal de réception pour lesdites données de plan de conduite sélectionnées ; et
ledit terminal de navigation (30) comprend
un programmateur de canal qui programme un canal de réception pour ledit terminal de navigation pour servir de dit canai de réception pour lesdites données de plan de conduite sélectionnées par ladite installation de navigation,
un extracteur qui extrait des données de destination desdites données de plan de conduite reçues au niveau dudit canal de réception,
un processeur de programmation d'itinéraire qui utilise lesdites données de destination qui sont extraites pour effectuer un procédé de programmation d'itinéraire.

2. Système pour fournir des données de navigation selon la revendication 1, dans lequel de multiples ensembles de données de plan de conduite, comprenant chacun des données pour guider des utilisateurs vers des lieux touristiques et pour positionner des données pour ceux-ci, sont fournis par ladite installation de diffusion (1), et dans lequel
ledit extracteur dudit terminal de navigation (30) extrait lesdites données de position.

3. Système pour fournir des données de navigation selon la revendication 1, dans lequel
lesdites données de plan de conduite sont préparées et sont fournies à ladite installation de diffusion (1) par ladite installation de navigation (2).

4. Serveur de navigation comprenant :
un récepteur qui reçoit des données de plan de conduite provenant d'une installation de diffusion (1) selon la revendication 1 qui transmet des données de diffusion, comprenant lesdites données de plan de conduite ; et **caractérisé par**
un accumulateur de données de préférence qui accumule des données de préférence pour un utilisateur ;
un sélecteur qui emploie lesdites données de préférence pour sélectionner au moins un ensemble desdites multiples données de plan de conduite ; et
un émetteur qui transmet à un terminal de navigation un canal de réception pour lesdites données de plan de conduite sélectionnées.

5. Serveur de navigation selon la revendication 4, comprenant en outre :
un élément de préparation qui prépare lesdites données de plan de conduite ; et
un fournisseur qui fournit lesdites données de plan de conduite préparées pour ladite installation de diffusion.

6. Terminal de navigation (30) **caractérisé en ce qu'**il comprend :
un programmateur de canal qui programme un canal de réception pour ledit terminal de navigation sur la base de données de canal de réception reçues en provenance d'une installation de navigation (2) selon la revendication 1 ;
un extracteur qui extrait des données de destination des données de plan de conduite qui sont reçues par l'intermédiaire dudit canal de réception ; et
une unité de programmation d'itinéraire qui effectue un procédé de programmation d'itinéraire en utilisant lesdites données de destination extraites.
